Europäisches Patentamt

European Patent Office

Office européen des brevets

(11) Veröffentlichungsnummer: **0 304 805 B1**

(12) **EUROPÄISCHE PATENTSCHRIFT**

(45) Veröffentlichungstag der Patentschrift: **15.04.92**

(21) Anmeldenummer: **88113439.9**

(22) Anmeldetag: **18.08.88**

(51) Int. Cl.⁵: **G01N 21/89**

(54) **Optische Abtastvorrichtung für transparentes Bahnmaterial.**

(30) Priorität: **24.08.87 DE 3728210**

(43) Veröffentlichungstag der Anmeldung:
**01.03.89 Patentblatt 89/09**

(45) Bekanntmachung des Hinweises auf die
Patenterteilung:
**15.04.92 Patentblatt 92/16**

(84) Benannte Vertragsstaaten:
**BE CH DE ES FR GB IT LI LU NL SE**

(56) Entgegenhaltungen:
DE-A- 1 548 670      DE-A- 1 622 114
DE-A- 2 552 331      FR-A- 2 591 341
US-A- 3 734 624      US-A- 3 799 679
US-A- 3 989 387

(73) Patentinhaber: **Erwin Sick GmbH Optik-
Elektronik
Sebastian-Kneipp-Strasse 1
W-7808 Waldkirch(DE)**

(72) Erfinder: **Pietzsch, Karl, Dr.
Richard-Wagner-Strasse 2
W-8192 Geretsried(DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)**

Rank Xerox (UK) Business Services

# Beschreibung

Die Erfindung betrifft eine optische Abtastvorrichtung für transparentes, im wesentlichen ebenes, platten- oder blattförmiges Material nach dem Oberbegriff des Patentanspruchs 1.

Bekannte optische Abtastvorrichtungen (z.B. DE-PS 25 52 331, DE-OS 33 14 620) dienen dazu, absorbierende Fehler, streuende Fehler, Abweichungen der Bahnoberfläche von der Ebenheit sowie Abweichungen der Bahn senkrecht zu ihrer Ebene von einer Normallage festzustellen und durch entsprechende Signale am Ausgang der Lichtempfangsvorrichtung einer systematischen elektrischen Messung zugänglich zu machen. Die Lichtempfangsanordnung kann dabei aus einem einzigen Photomultiplier oder aus einer Nebeneinanderanordnung mehrerer Einzelphotoempfänger bestehen. Auch Flächenarrays oder positionsempfindliche Einzelphotoempfänger können verwendet werden, um Abweichungen eines Reflexionsstrahls von einer Normallage nach mehreren Seiten zu erfassen.

Probleme bei der Messung der Ebenheit von Oberflächen transparenter Materialbahnen treten jedoch dadurch auf, daß der auf die Oberfläche auftreffende Fahrstrahl sowohl an der Vorderseite als auch an der Rückseite der Materialbahn reflektiert wird, so daß sich in der photoelektrischen Lichtempfangsanordnung zwei Empfangssignale überlagern und insbesondere bei unterschiedlichen Abweichungen der Ebenheiten von Vorderseite und Rückseite der Bahn kein eindeutiges Fehlersignal mehr gewonnen werden kann.

Aus der US-PS 37 34 624 ist eine optische Abtastvorrichtung zur Fehlerinspektion bei Filmemulsionen bekannt, wobei nur die Oberseite der Emulsion untersucht werden soll, und hierfür der an der unteren Grenzfläche der Emulsion und an deren Trägermaterial reflektierte Strahlungsanteil unterdrückt wird. Dazu ist ein drehbares Spiegelrad so in dem Beleuchtungsstrahlengang angeordnet, daß das Licht von der Lichtquelle unter einem streifenden Winkel, also sehr flach auf die Emulsionsoberfläche trifft, wobei das Licht parallel zu letzterer polarisiert ist.

Die Aufgabe der vorliegenden Erfindung besteht darin, eine optische Abtastvorrichtung der eingangs genannten Gattung zu schaffen, mit der die Abweichungen der Ebenheit der vorderen und der hinteren Oberfläche des Materials punktuell optisch ermittelt und in Form elektrischer Signale detektiert werden können.

Zur Lösung dieser Aufgabe sind die Merkmale des kennzeichnenden Teils des Patentanspruchs 1 vorgesehen.

Aufgrund dieser Ausbildung entstehen zwei seitlich versetzte Reflexionsstrahlen, deren Reflexionsrichtung von Abweichungen der oberen bzw. unteren Oberfläche des Materials von der Ebenheit beeinflußt wird. Sind die beiden Reflexionsstrahlen beispielsweise aufgrund exakt parallel zueinander verlaufender Oberflächen parallel zueinander, so fallen sie an die gleiche Stelle einer positionempfindlichen Lichtempfangsanordnung, was als Maß für die Parallelität der beiden Strahlen ausgewertet werden kann. Aufgrund der Positionsempfindlichkeit der Lichtempfangsanordnung kann auch ermittelt werden, ob die beiden parallel zueinander verlaufenden versetzten Reflexionsstrahlen insgesamt von einer vorgegebenen Normalreflexionsrichtung abweichen.

Weichen die Ebenheiten der beiden Oberflächen dagegen etwas voneinander ab, so weisen die beiden Reflexionsstrahlen von der vorderen bzw. der hinteren Oberfläche einen Winkel miteinander auf, so daß sie auf unterschiedliche Stellen der positionsempfindlichen Lichtempfangsanordnung auftreffen, was zur Winkelbestimmung und damit auch zur Erfassung der relativen Abweichungen der Ebenheiten ausgewertet werden kann. Mit dieser Methode ist also nur der Unterschied in den Abweichungen der beiden Oberflächen von der Ebenheit feststellbar.

Bei der Ausführungsform nach einem der Ansprüche 7 oder 8 ist also während einer ersten Periode das auf die Meßstelle auf dem Material auftreffende Licht parallel zur Oberfläche polarisiert. In diesem Fall wird ein erster Teil des Einfallslichtstrahles an der oberen Oberfläche und ein zweiter Teil an der unteren Oberfläche des Materials reflektiert, wobei die beiden Reflexionsstrahlen von der Lichtempfangsanordnung entweder getrennt erfaßt werden können oder als Summe mit definierten Anteilen von Ober- und Unterfläche.

Während der nächsten Meßperiode wird Licht verwendet, welches senkrecht zur Fahrstrahlebene polarisiert ist. Aufgrund der Anordnung unter dem Brewster-Winkel wird an der oberen Fläche kein Licht reflektiert, sondern die gesamte Lichtmenge dringt unter dem Brechungswinkel vollständig in das Innere des Bahnmaterials ein. Dieses Licht wird bei Beschichtung der Rückseite an der hinteren bzw. unteren Oberfläche des Materials reflektiert und gelangt zur Lichtempfangsanordnung, welches somit auch ein für die Winkelverkippung bzw. die Abweichung von der Ebenheit der Rückseite oder sonstige Fehler des Materials repräsentatives elektrisches Signal bilden kann.

Eine besonders vorteilhafte Ausführungsform der Erfindung ist also darin zu sehen, daß periodisch in schneller Folge zwischen den beiden Polarisationsrichtungen hin- und hergeschaltet wird und daß die Lichtempfangsanordnung über eine elektronische Auswerteschaltung mit diesem Umschaltvorgang in der Weise synchronisiert ist, daß die beiden Meßvorgänge in der elektronischen Auswerteschaltung getrennt werden. Die schnelle Umschaltung zwischen den beiden Polarisationsrichtungen kann z.B. durch ein schnell rotierendes Polarisationsfilter verwirklicht werden. Auch zwei getaktet arbeitende Lichtquellen mit senkrecht zueinander angeordneten Polarisationsrichtungen, deren Lichtbündel in den gleichen Strahlengang gelenkt werden, können Verwendung finden.

In besonders vorteilhafter Weise wird die erfindungsgemäße optische Abtastvorrichtung in Kombination mit einer klassischen Abtastvorrichtung, die in Reflexion oder Transmission arbeitet, verwendet, indem auf der Abtastlinie ein zweiter, in einer steileren Fahrstrahlebene eine Abtastbewegung ausführender Fahrstrahl auftrifft und unter dem Reflexionswinkel β und/oder in dessen Verlängerung jeweils eine weitere photoelektrische Lichtempfangsanordnung angeordnet ist.

Von Vorteil ist es hierbei, wenn beide in den beiden Einfallsebenen vorhandenen Fahrstrahlen unter Verwendung eines teildurchlässigen Spiegels von derselben Lichtquelle und der gleichen Lichtablenkvorrichtung erzeugt sind.

Insbesondere soll vorgesehen sein, daß die Lichtempfangsvorrichtung wenigstens zwei, vorzugsweise jedoch mehrere in einer bestimmten Richtung nebeneinander angeordnete Einzelphotoempfänger aufweist. Besonders zweckmäßig ist es, wenn die Einzelphotoempfänger als Flächenarray angeordnet sind. Auch die Verwendung eines positionsempfindlichen Einzelphotoempfängers ist möglich.

Ein bevorzugtes Verfahren zur Messung der Abweichungen der Oberflächen eines transparenten Materials von der Ebenheit mit einer vorstehend definierten Abtastvorrichtung kennzeichnet sich erfindungsgemäß dadurch, daß periodisch abwechselnd parallel und senkrecht zur Einfallsebene polarisiertes Licht verwendet und die Ausgangssignale der Lichtempfangsanordnung innerhalb jeder Periode, in der ein bestimmter Polarisationszustand besteht, getrennt ausgewertet werden.

Während der Einfallswinkel des Fahrstrahls der klassischen Fehlerabtastvorrichtung bei etwa 10° liegt, liegt der Einfallswinkel der polarisierten Fahrstrahlen, d.h. der Brewsterwinkel z.B. bei 56°.

Die Erzeugung des polarisierten Lichtes kann im einfachsten Fall durch Verwendung eines linearen Polarisationsfilters in unpolarisiertem Licht erfolgen.

Es ist aber auch möglich, zirkular polarisiertes Licht zu verwenden und dieses durch ein λ/4-Plättchen in geeignet gerichtetes linear polarisiertes Licht umzuwandeln.

Weiter ist es möglich, von vornherein ein in einer der beiden Vorzugsrichtungen polarisiertes Licht zu verwenden und dessen polarisationsrichtung zeitweise durch ein λ/2-Plättchen um 90° zu drehen. Auch kann das polarisierte Licht durch Filterung von zirkular polarisiertem Licht erzeugt werden.

Für den Fall, daß die erfindungsgemäße Abtastvorrichtung mit einer klassischen Abtastvorrichtung kombiniert wird, wobei durch einen teildurchlässigen Spiegel der Lichteinfall unter dem Brewsterwinkel herbeigeführt wird, ist der größere optische Weg in dem unter dem Brewsterwinkel auftreffenden Fahrstrahl nicht problematisch, weil die herauszufindenden Winkelverkippungsfehler meist sehr viel großflächiger sind, als aufzufindende Defekte im Material, wie z.B. Kratzer. Der unter dem Brewsterwinkel auftreffende Fahrstrahl darf also beim Auftreffen auf die Oberfläche des Bahnmaterials etwas defokussiert sein.

Der Brewsterwinkel berechnet sich bekanntlich nach der Formel:

$$\tan \alpha = \frac{n_2}{n_1}$$

Dabei ist $n_1$ der Berechnungsindex oberhalb des Materials, also der Brechungsindex von Luft (= 1), während $n_2$ der Brechungsindex des Materials ist.

Die Erfindung wird im folgenden beispielsweise anhand der Zeichnung beschrieben; in dieser zeigt:

Fig. 1     in schematischer perspektivischer Darstellung eine erste Ausführungsform einer erfindungsgemäßen optischen Abtastvorrichtung,

Fig. 1a     eine schematische Darstellung der Strahlengänge mit Lichteinfall unter dem Brewsterwinkel und Verwendung von parallel zur Materialoberfläche polarisiertem Licht,

Fig. 2     ein zweites Ausführungsbeispiel mit telezentrischem Strahlengang,

Fig. 3     ein schematisches Blockschaltbild einer bevorzugten Auswertungsschaltung für das Ausführungsbeispiel nach Fig. 2,

Fig. 4     eine Seitenansicht einer mit einer klassischen Abtastvorrichtung kombinierten optischen Abtastvorrichtung gemäß der Erfindung,

Fig. 5     ein schematisches Blockschaltbild einer ersten vorteilhaften Auswerteschaltung für das Ausführungsbeispiel nach Fig. 4, und

Fig. 6     ein schematisches Blockschaltbild einer anderen vorteilhaften Auswerteschaltung für das Ausführungsbeispiel nach Fig. 4.

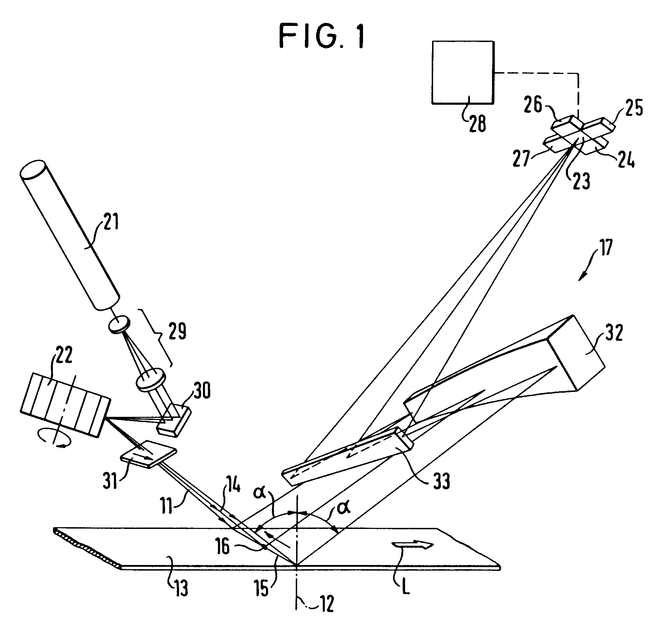

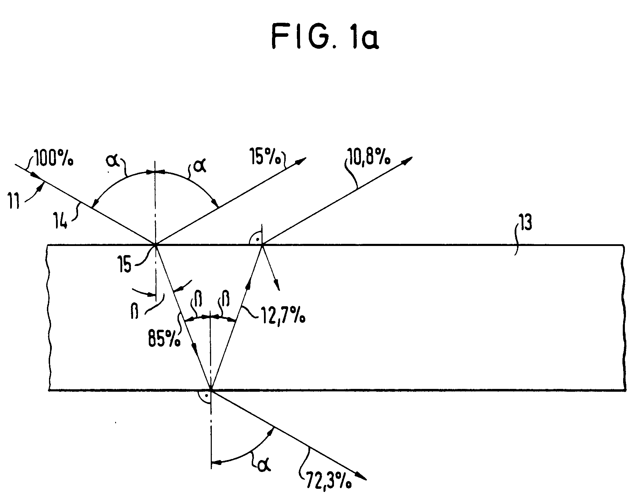

Nach Fig. 1 beaufschlagt ein Laser 21 über eine Strahlaufweitungsoptik 29 und einem planen Umlenkspiegel 30 ein in Richtung des Pfeiles umlaufendes Spiegelrad 22, welches in einer sektorförmigen Fahrstrahlebene 11 einen Fahrstrahl 14 bildet, der auf der Oberfläche eines darunter angeordneten transparenten bahnförmigen Materials 13 einen scharfen Lichtfleck 16 erzeugt, welcher die Oberfläche entlang einer Abtastlinie 15 in Richtung des Pfeiles periodisch abtastet.

Das Material 13 wird in Richtung des Pfeiles L kontinuierlich vorgeschoben, und zwar mit einer solchen Geschwindigkeit, daß durch das zeilenweise Abtasten der Oberfläche des Materials 13 quer zur Vorschubrichtung praktisch alle Stellen der Bahnoberfläche einmal vom Lichtfleck 16 erfaßt werden. Nahe dem Spiegelrad 22 ist innerhalb der Einfallsebene 11 ein Linearpolarisator 31 angeordnet, der das vom Laser 21 kommende Licht parallel zur Abtastlinie 15 linear polarisiert. Der Einfallswinkel $\alpha$, den die Fahrstrahlebene 11 mit der Senkrechten 12 auf dem Material 13 einschließt, ist gleich dem Brewsterwinkel.

Unter dem Reflexionswinkel $\alpha$ zur Fahrstrahlebene 11 ist eine Lichtempfangsanordnung 17 vorgesehen, welche einen streifenförmigen Kohlspiegel 32 umfaßt, der das von der Oberfläche des Bahnmaterials 13 reflektierte Licht erfaßt und über einen streifenförmigen planen Umlenkspiegel 33 die Oberfläche des Spiegelrades 22 auf ein Photoempfängerarray abbildet, das aus einem zentralen Einzelphotoempfänger 23 und diesen umgebenden weiteren Einzelphotoempfängern 24, 25, 26 und 27 besteht.

Bei ungestörter Oberfläche des Bahnmaterials 13 wird der auf der Oberfläche des Spiegelrads 22 befindliche scharfe Lichtfleck 16 auf den zentralen Einzelphotoempfänger 23 abgebildet, so daß die angeschlossene elektronische Auswerteschaltung 28 ein für eine ungestörte Bahnoberfläche repräsentatives Signal abgibt.

Ist die Oberfläche des Bahnmaterials 13 dagegen an der Stelle, wo sich der Lichtfleck 16 gerade befindet etwas in der einen oder anderen Richtung gekippt, d.h. weicht sie in der einen oder anderen Richtung von der Soll-Ebenheit ab, so gelangt das Bild des Lichtflecks auf dem Spiegelrad 22 zu einem der benachbarten Einzelphotoempfänger 24, 25, 26 oder 27, woraus die elektronische Auswerteschaltung 28 ein entsprechendes Winkelabweichungssignal bildet, aus dem auf die Art und den Grad der Unebenheit der Bahnoberfläche an dieser Stelle geschlossen werden kann.

Fig. 1a zeigt in stark vergrößertem Maßstabe einen Querschnitt durch das platten- oder blattförmige Material 13 nach Fig. 1, wobei die Schnittebene senkrecht auf der Abtastlinie 15 steht. Die polarisationsrichtung der Fahrstrahlen 14 verläuft parallel zur Fahrstrahlebene 11 bzw. zur Oberfläche des Materials 13.

Die Lichtintensität des auf die Oberfläche des Materials 13 auftreffenden Fahrstrahls 14 ist mit 100 % bezeichnet. 15 % der Lichtintensität werden unter dem Reflexionswinkel $\alpha$ an der Oberfläche des Materials 13 reflektiert. 85 % der Lichtintensität werden unter dem Brechungswinkel $\beta$ in das Innere des Materials 13 hineingebrochen, um dann auf die untere bzw. hintere Fläche des Materials 13 aufzutreffen. Dort treten 72,3 % der Lichtintensität aus dem Material 13 aus, während 12,7 % unter dem Reflexionswinkel $\beta$ zur oberen Oberfläche des Materials 13 zurückreflektiert werden. Von diesem Licht treten 10,8 % der ursprünglichen Lichtintensität aus der oberen Oberfläche des Materials 13 aus. Die nur als Pfeil angedeuteten weiteren Reflexionen innerhalb des Materials 13 sind intensitätsmäßig vernachlässigbar.

In Fig. 1a ist angenommen, daß die obere Oberfläche und die untere Oberfläche des Materials 13 an den Auftreffstellen des Eintritts-Fahrstrahls 14 exakt parallel zueinander verlaufen, so daß die beiden Austrittsstrahlen mit Intensitäten von 10,8 bzw. 15 % parallel zueinander verlaufen. Sie würden bei der optischen Anordnung nach Fig. 1 auf dem mittleren Einzelphotoempfänger 23 vereinigt werden.

Weisen beide Oberflächen unter Beibehaltung der exakten Parallelität einen Ebenheits-Fehler auf, so werden die beiden Reflexionsstrahlen mit 10,8 bzw. 15 % der Intensität auf einen der seitlichen Einzelphotoempfänger 24, 25, 26 oder 27 gelenkt. Die Tatsache, daß nur ein einzelner Einzelphotoempfänger von einem Lichtpunkt beaufschlagt wird, besagt also, daß die vordere und die hintere Oberfläche an den Lichtauftreffstellen genau parallel zueinander verlaufen.

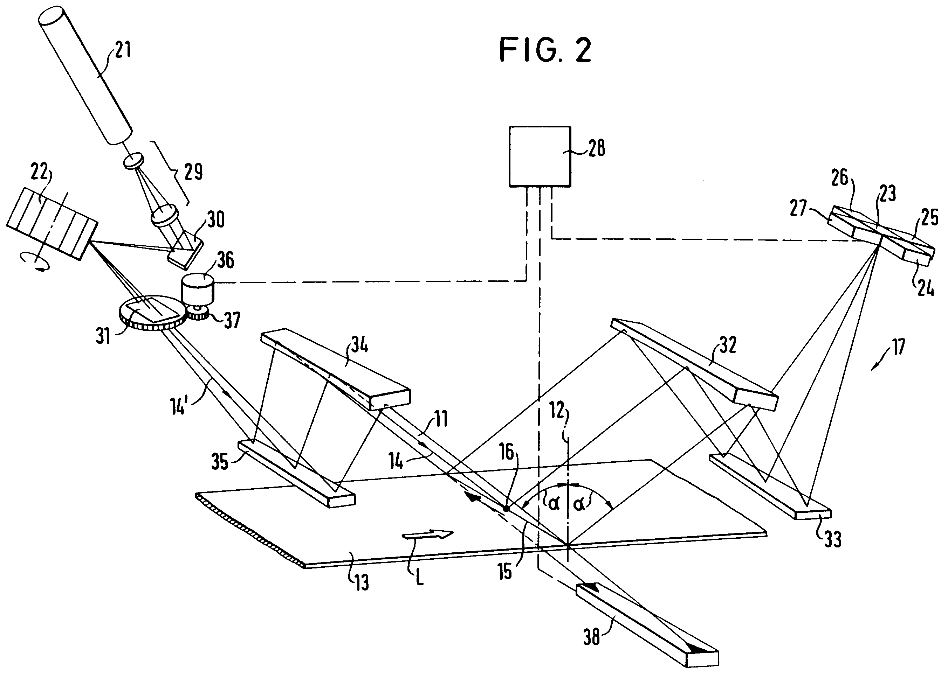

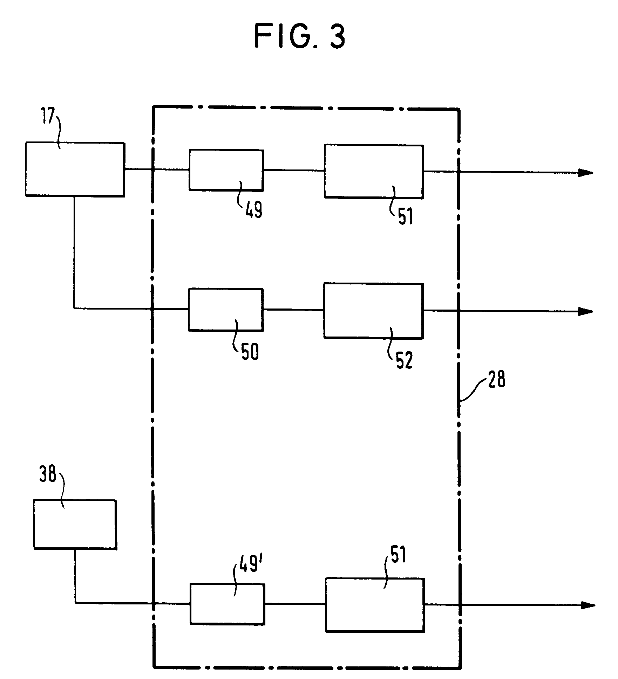

Sind die vordere und die hintere Oberfläche des Materials 13 nicht genau parallel, so entsteht zwischen den Reflexionsstrahlen mit 10,8 bzw. 15 % Lichtintensität ein Winkel, der dazu führt, daß beispielsweise ein Strahl auf den mittleren Einzelphotoempfänger 23, der andere auf den einen seitlichen Einzelphotoempfänger 25 auftrifft. Hieraus kann auf das Ausmaß der Winkeldivergenz und damit der Abweichung von der Parallelität der beiden Oberflächen des Materials 13 an den Lichtauftreffstellen geschlossen werden. Die entsprechenden Auswertungen werden in der elektronischen Auswerteschaltung 28 vorgenommen, deren praktische Ausführung so wie im oberen Blockschaltbild der Fig. 3 sein kann, welches weiter unten im Zusammenhang mit Fig. 2 beschrieben wird.

In den folgenden Figuren bezeichnen gleiche Bezugszahlen entsprechende Bauelemente wie in Fig. 1.

Im Unterschied zu Fig. 1 ist bei der Ausführungsform nach Fig. 2 ein telezentrischer Strahlengang vorgesehen. Das vom Spiegelrad 22 durch den Polarisationsfilter 31 hindurchgeschickte Licht wird über einen Umlenkplanspiegel 35 zunächst auf einen streifenförmigen Sendehohlspiegel 34 gelenkt, dessen Brennpunkt auf der Oberfläche des Spiegelrades 22 liegt. Hierdurch wird ein Fahrstrahl 14 erzeugt, der beim Drehen des Spiegelrades 22 parallel zu sich selbst verschoben wird. Dabei durchläuft der Fahrstrahl 14 wieder die Fahrstrahlebene 11, welche unter dem Brewsterwinkel α zur Senkrechten auf dem Material 13 verläuft.

Der streifenförmige Hohlspiegel 32 auf der Empfangsseite ist so angeordnet, daß er das empfangene Licht auf den mittleren Einzelphotoempfänger 23 des Photoempfängerarrays konzentriert, wenn die Oberflächen an der Lichtauftreffstelle parallel zueinander verlaufen und in einer Sollebene, die der Anordnung des ebenen Materials 13 in Fig. 2 entspricht, angeordnet sind. Das Photoempfängerarray 23 bis 27 befindet sich also im Brennpunkt des streifenförmigen Hohlspiegels 32.

Weiter ist im Unterschied zu Fig. 1 in Fig. 2 angedeutet, daß das Polarisationsfilter 31 um eine mit dem mittleren Fahrstrahl 14' zusammenfallende Achse drehbar ist, und zwar durch einen Motor 36, der die mit einem Außenzahnkranz versehene Halterung des Polarisationsfilters 31 beispielsweise über ein Ritzel 37 zu einer schnellen Drehbewegung antreibt. Der Motor 36 wird von der elektronischen Auswerteschaltung 28 gesteuert und gibt an die elektronische Auswerteschaltung 28 ein Winkelpositionssignal ab, das es der Auswerteschaltung 28 gestattet, die momentane Polarisationsrichtung des Fahrstrahls 14 zu erkennen und mit den Empfangssignalen vom Photoempfängerarray 23, 24, 25, 26, 27 zu synchronisieren.

In der Verlängerung des Fahrstrahls 14 hinter dem Bahnmaterial 13 ist eine weitere Lichtempfangsanordnung 38 vorgesehen, welche das gesamte durch das Bahnmaterial 13 hindurchgehende Licht empfängt und in ein entsprechendes elektrisches Signal umwandelt. Die photoelektronische Lichtempfangsanordnung 38 kann ähnlich wie die in Reflexion arbeitende photoelektrische Lichtempfangsanordnung 17 aufgebaut sein, was aber aufgrund der zeichnerischen Vereinfachung nicht dargestellt ist.

Aufgrund dieser Ausbildung wird dann, wenn der Polarisationsfilter 31 Licht mit parallel zur Abtastlinie 15 verlaufender Polarisationsrichtung erzeugt, Licht gemäß Fig. 1a in Reflexion in die Lichtempfangsanordnung 17 und in Transmission (72,3 % in Fig. 1a) in die Lichtempfangsanordnung 38 gelangen, welche bei entsprechender Ausbildung wie die Lichtempfangsanordnung 17 (positionsempfindlich) auf Keilfehler des Materials an der Lichtauftreffstelle anspricht.

Eine Auswerteschaltung für die Empfangsignale für den Fall, daß das Licht parallel zur Abtastlinie 15 polarisiert ist, ist in Fig. 3 wiedergegeben. Die Ausgangssignale der Lichtempfangsanordnung 17 sind innerhalb der elektronischen Auswerteschaltung 28 zum einen über Tiefpaßfilter 49 bzw. rekursive Filter 50 an eine positionsempfindliche Detektorschaltung 51 bzw. eine Fehlerdetektorschaltung 52 angeschlossen. Die positionsempfindliche Detektorschaltung 51 liefert an ihrem Ausgang ein Signal, das der Summe der Ebenheitsfehler (Winkelverkippung) an der oberen und unteren Oberfläche der Materialbahn 13 im Bereich der Lichtauftreffstelle entspricht. Am Ausgang der fehlerdetektorschaltung 52 erscheinen Fehlersignale, die für Defekte innerhalb des Materials 13 oder auf dessen Oberseite repräsentativ sind.

Die weitere Lichtempfangsanordnung 38 beaufschlagt über Tiefpaßfilter 49' eine positionsempfindliche Detektorschaltung 51, so daß an deren Ausgang ein für den Keilwinkel zwischen den beiden Oberflächen an der Lichtauftreffstelle repräsentatives Signal entsteht.

Die Auswerteschaltung nach Fig. 3 wird verwendet, wenn ständig parallel zur Oberfläche des Materials 13 polarisiertes Licht verwendet wird, der Polarisationsfilter 31 sich also nicht in Umlauf befindet.

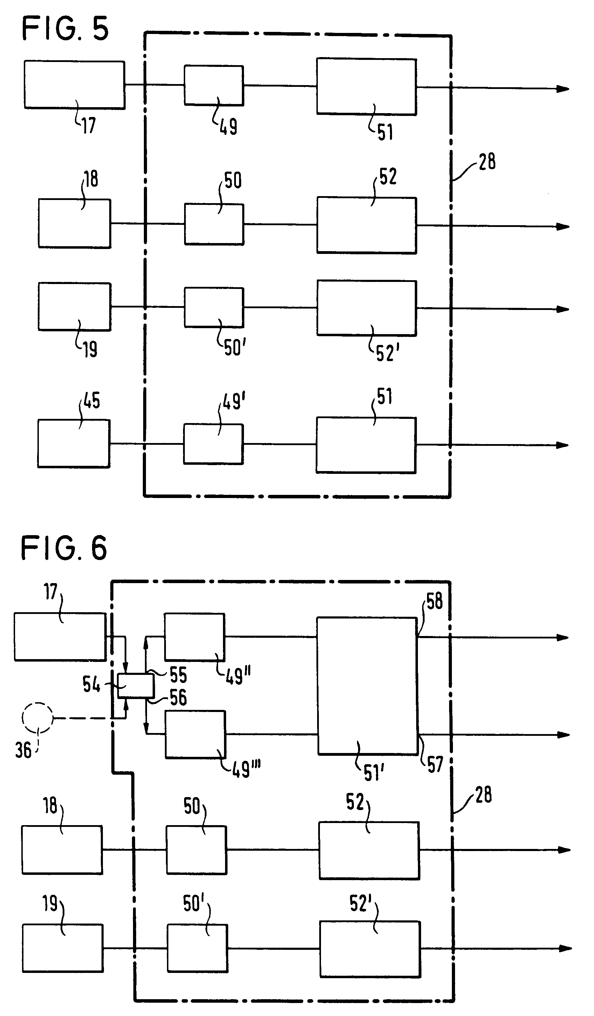

Wird nun das Polarisationsfilter 31 nach Fig. 2 in Umlauf versetzt, so daß abwechselnd parallel und senkrecht zur Fahrstrahlebene 11 polarisiertes Licht zur Wirkung kommt, so wird zweckmäßigerweise eine Auswertung nach dem oberen Schaltbild in Fig. 6 vorgenommen. Innerhalb der Auswerteschaltung 28 werden die Ausgangssignale an ein Polarisationsrichtungs-Auswahlglied 54 angelegt, welches über das vom Motor 36 abgeleitete Winkelpositionssignal angesteuert ist. Am Ausgang 55 entsteht so ein erstes Ausgangssignal für parallel zur Fahrstrahlebene 11 polarisiertes Licht. Am Ausgang 56 wird ein weiteres Ausgangssignal zur Verfügung gestellt, welches dem Lichteinfall auf die Einzelphotoempfänger 23 bis 27 bei senkrecht zur Fahrstrahlebene 11 polarisiertem Licht entspricht. Die beiden Ausgänge 55, 56 sind über Tiefpaßfilter 49", 49"' an einen positionsempfindlichen Detektor 51' angelegt, welcher wie folgt arbeitet: Von den Tiefpaßfiltern 49" wird ein der Summe der Ebenheitsfehler von vorderer und hinterer Oberfläche entsprechendes Fehlersignal an den postionsempfindlichen Detektor 51' abgegeben. Die Tiefpaßfilter 49"' liefern ein nur für Ebenheitsfehler der beschichteten Rückseite des Materials 13 repräsentatives Signal. In der positionsempfindlichen Detektorschaltung 51' werden diese Signale so verarbeitet, daß an einem ersten Ausgang 57 ein für Ebenheitsfehler der hinteren Oberfläche des Materials 13 repräsentatives Signal und an einem weiteren Ausgang 58 ein für Ebenheitsfehler der oberen Oberfläche des Materials 13 repräsentatives Signal erscheint, welches durch Differenzbildung des von den Tiefpaßfilter 49" einerseits und von den Tiefpaßfilter 49''' kommenden Signale andererseits abgeleitet werden kann. Das so gewonnene Differenzsignal kann noch mit einem Korrekturfaktor multipliziert werden.

Auf diese Weise kann nicht nur die Relation der Ebenheitsfehler von oberer und unterer Oberfläche des Materials 13 (Fig. 3, oberes Schaltbild), sondern auch die absolute Unebenheit sowohl der oberen als auch der unteren Oberfläche getrennt gemessen werden.

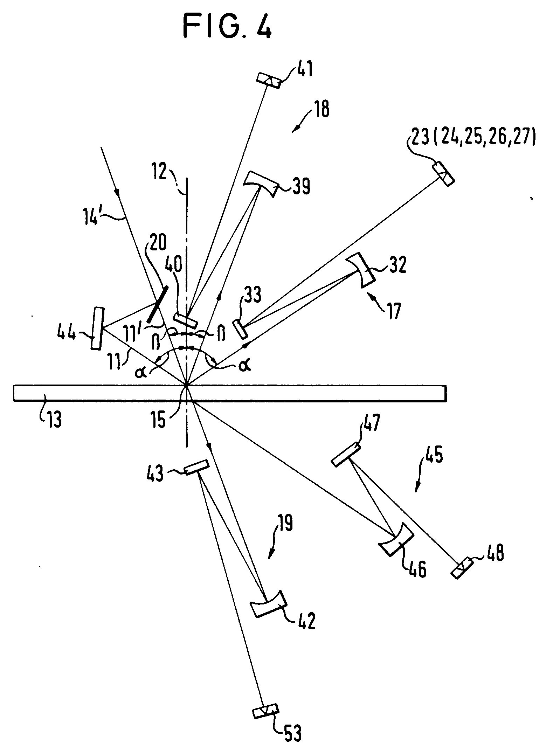

In Fig. 4 ist schematisch die Kombination einer mit polarisiertem Licht unter dem Brewsterwinkel arbeitenden optischen Abtastvorrichtung gemäß der Erfindung mit einem klassischen Scanner gezeigt.

Eine Sende-Abtastvorrichtung, wie sie in den Fig. 1 und 2 gezeigt ist, erzeugt zunächst einen Primärfahrstrahl 14', der in einer senkrecht zur Zeichnungsebene der Fig. 4 verlaufenden ersten Einfallsebene 11' eine Abtastbewegung ausführt. Dieser Primärfahrstrahl 14' trifft unter einem Winkel $\beta$ auf die Oberfläche des Bahnmaterials 13, der relativ steil (z.B. 10°) und auf jeden Fall wesentlich kleiner als der Brewsterwinkel $\alpha$ ist. Unter dem Reflexionswinkel $\beta$ befindet sich eine photoelektrische Lichtempfangsanordnung 18 mit einem senkrecht zur Zeichnungsebene streifenförmögen Hohlspiegel 39, einem Umlenkspiegel 40 und einem aus einem oder mehreren Einzelphotoempfängen bestehenden Photoempfänger 41.

Weiter ist in Verlängerung des Primärfahrstrahls 14' eine weitere photoelektrische Lichtfangsanordnung 19 vorgesehen, die einen streifenförmigen Hohlspiegel 42, einen Planumlenkspiegel 43 sowie einen aus einem oder mehreren Einzelphotoempfängern bestehenden Photoempfänger 53 aufweist.

Mit der bis hier beschriebenen Anordnung können Fehler des Bahnmaterials 13 in Reflexion oder Transmission in klassischer Weise festgestellt werden.

Innerhalb des Primärfahrstrahls 14' befindet sich ein teildurchlässiger Spiegel 20, der einen Teil des Sendelichts zu einem Umlenkplanspiegel 44 umlenkt, welcher das auftreffende Licht unter einem solchen Winkel zur Abtastlinie 15 des Primärfahrstrahls 14' reflektiert, daß die so gebildete zweite Einfallsebene 11 unter dem Brewsterwinkel $\alpha$ auf die Oberfläche des Bahnmaterials 13 auftrifft.

Unter dem Reflexionswinkel $\alpha$ ist wieder die photoelektrische Lichtempfangsanordnung 17 analog den Fig. 1 oder 2 angeordnet.

Außerdem ist in Verlängerung der Einfallsebene 11 unter dem Bahnmaterial 13 eine weitere photoelektrische Lichtempfangsanordnung 45 vorgesehen, die wieder einen streifen-förmigen Hohlspiegel 46, einen streifenförmigen planen Umlenkspiegel 47 und einen aus einem oder mehreren Einzelphotoempfängern bestehenden Photoempfänger 48 umfaßt.

Auf diese Weise können mit ein und demselben Scanner in klassischer Weise Fehler bestimmt und Winkelverkippungen der beiden Oberflächen des Bahnmaterials 13 sowohl als Summe als auch separat erfaßt werden, was im folgenden anhand von zwei praktischen Ausführungsbeispielen in den Fig. 5 und 6 erläutert wird.

Sofern die Polarisationsrichtung des Fahrstrahls 14 in Fig. 4 parallel zur Fahrstrahlebene 11 bzw. zur Oberfläche des Materials 13 verläuft, können mit der Anordnung nach Fig. 5 folgende Fehler bestimmt werden:
Mittels der Lichtempfangsanordnung 17 über die Tiefpaßfilter 49 und die positionsempfindliche Detektorschaltung 51 die Summe der Ebenheitsfehler der oberen und der unteren Oberfläche des Materials 13 an der Lichtauftreffstelle. Diese Fehlerbestimmung entspricht der obersten Schaltstufe in Fig. 3.

Die Lichtempfangsanordnung 18 beaufschlagt über ein rekursives Filter 50 eine Fehlerdetektorschaltung 52, an deren Ausgang ein für lokale Defekte im Material 13 repräsentatives Signal erscheint.

Alternativ oder gleichzeitig kann das elektrische Ausgangssignal der Lichtempfangsanordnung 19 über ein rekursives Filter 50' an eine weitere fehlerdetektorschaltung 52' angelegt werden, an deren Ausgang ein für sich in Transmission bemerkbar machende lokale Defekte repräsentatives Signal erscheint.

Die Lichtempfangsanordnung 45 ist über Tiefpaßfilter 49' an eine positionsempfindliche Detektorschaltung 51 angelegt, an deren Ausgang ähnlich wie in Fig. 3 unten ein für Keilfehler des Materials 13 an der Lichtauftreffstelle repräsentatives Signal erscheint.

Sofern die Polarisationsrichtung des Fahrstrahls 14 in der aus Fig. 2 ersichtlichen Weise ständig zwischen den beiden Polarisationsrichtungen senkrecht und parallel zur Fahrstrahlebene 11 hin- und hergeschaltet wird, ist eine Schaltung nach Fig. 6 zweckmäßig.

Der obere Teil des Blockschaltbildes wurde bereits oben im Zusammenhang mit Fig. 2 beschrieben. Zusätzlich sind jedoch bei dem Ausführungsbeispiel nach Fig. 4 noch die Lichtempfangsanordnung 18 über rekursive Filter 50 und die Lichtempfangsanordnung 19 über rekursive Filter 50' an Fehlerdetektorschaltungen 52 bzw. 52' angelegt, um analog zu den mittleren beiden Schaltungen in Fig. 5 zusätzlich auch noch lokale Defekte des Materials, auf die die betreffenden Lichtempfangsanordnungen ansprechen, zu erfassen.

**Patentansprüche**

1. Optische Abtastvorrichtung für transparentes, im wesentlichen ebenes, platten- oder blattförmiges Material mit einer optischen Sendevorrichtung (21, 22, 29, 30, 31), die eine Lichtquelle (21) und eine von dem durch diese erzeugten Lichtstrahl beaufschlagte Lichtablenkvorrichtung wie ein Spiegelrad (22) aufweist, welche einen in der schräg zur Oberfläche des Materials (13) verlaufenden Fahrstrahlebene (11) eine periodische Abtastbewegung ausführenden Fahrstrahl (14) erzeugt, der auf der Oberfläche des Materials (13) einen entlang einer Abtastlinie (15) sich bewegenden Abtastlichtfleck (16) erzeugt, und mit einer photoelektrischen optischen Lichtempfangsanordnung (17), die unter einem dem Reflexionswinkel (2α) gleichen Winkel relativ zur Sendevorrichtung (21, 22, 29, 30, 31) angeordnet ist, dadurch **gekennzeichnet,** daß der Winkel (2α) zwischen der Sendevorrichtung (21, 22, 29, 30, 31) und der Lichtempfangsanordnung (17) gleich dem doppelten Brewsterwinkel (α) ist, daß die Sendevorrichtung (21, 22, 29, 30, 31) einen das Licht des in der Fahrstrahlebene (11) die periodische Abtastbewegung ausführenden Fahrstrahls (14) parallel zur Oberfläche des Materials (13) linear polarisierenden Linearpolarisator (31) enthält, und daß die das von der Oberseite und der Unterseite des Bahnmaterials (13) reflektierte Licht erfassende Lichtempfangsanordnung (17) eine Winkelabweichungen zwischen den von der Ober- und Unterseite reflektierten Strahlen feststellendes Differenzierungsarray (23, 24, 25, 26, 27) enthält.

2. Optische Abtastvorrichtung nach Anspruch 1, dadurch **gekennzeichnet,** daS auf der Abtastlinie (15) ein zweiter, in einer steileren Fahrstrahlebene (11') eine Abtastbewegung ausführender Fahrstrahl auftrifft und unter dessen Reflexionswinkel (β) und /oder in dessen Verlängerung jeweils eine weitere photoelektrische Lichtempfangsanordnung (18, 19) angeordnet ist.

3. Optische Abtastvorrichtung nach Anspruch 1 und 2, dadurch **gekennzeichnet,** daß beide in den beiden Fahrstrahlebenen (11, 11') vorhandenen Fahrstrahlen unter Verwendung eines teildurchlässigen Spiegels (20) von derselben Lichtquelle (21) und der gleichen Lichtablenkvorrichtung (22) erzeugt sind.

4. Optische Abtastvorrichtung nach einem der vorhergehenden Ansprüche, dadurch **gekennzeichnet,** daß die Lichtempfangsanordnungen (17; 17, 38; 17, 18, 19, 45 ) wenigsten zwei, vorzugsweise jedoch mehrere in einer bestimmten Richtung nebeneinander angeordnete Einzelphotoempfänger (23, 24, 25, 26, 27) aufweisen.

5. Optische Abtastvorrichtung nach einem der Ansprüche 1 bis 3, dadurch **gekennzeichnet,** daß die Lichtempfangsanordnungen (17; 17, 38; 17, 18, 19, 45 ) jeweils einen positionsempfindlichen Photoempfänger aufweisen.

6. Optische Abtastvorrichtung nach Anspruch 4, dadurch **gekennzeichnet,** daß die Einzelphotoempfänger (23, 24, 25, 26, 27) als in Richtung der Reflexionsversetzung sich erstreckendes Lineararray oder sich auch senkrecht zur vorgenannten Richtung erstreckendes Flächenarray angeordnet sind.

7. Verfahren zur Messung der Abweichungen der Oberflächen eines transparenten Materials von der Ebenheit mit einer optischen Abtastvorrichtung, wobei ein von einer Lichtquelle erzeugter Lichtstrahl eine Lichtablenkvorrichtung, wie ein Spiegelrad, beaufschlagt, welche einen in einer Fahrstrahlebene verlaufenden, eine periodische Abtastbewegung ausführenden Fahrstrahl erzeugt, der auf der Oberfläche des Materials einen entlang einer Abtastlinie sich bewegenden Abtastlichtfleck erzeugt, der von einer unter dem Reflexionswinkel angeordneten photoelektrischen Lichtempfangsanordnung erfaßt wird, dadurch gekennzeichnet daß die Lichtempfangsanordnung so angeordnet und ausgelegt ist, daß von der Oberseite und der Unterseite des Bahnmaterials reflektiertes Licht differenziert von der Lichtempfangsanordnung erfaßt wird, so daß Winkelabweichungen zwischen den von der Ober- und der Unterfläche reflektierten Strahlen feststellbar sind, daß die Fahrstrahlebene relativ mit der Senkrechten zur Oberfläche des Materials dem Brewsterwinkel bildet, und daß periodisch abwechselnd parallel und senkrecht zur Fahrstrahlebene (11) polarisiertes Licht verwendet und die Ausgangssignale der Lichtempfangsanordnung (17) innerhalb jeder Periode, in der ein bestimmter Polarisationszustand besteht, getrennt ausgewertet werden.

8. Verfahren nach Anspruch 7, bei dem das Material kontinuierlich senkrecht zur Abtastlinie und parallel zu seiner Ebene vorgeschoben wird,

dadurch **gekennzeichnet,**

daß die Polarisationsrichtung mit einer so hohen Frequenz periodisch geändert wird, daS praktisch an jeder Stelle des Materials eine Messung bei der einen und eine Messung bei der anderen Polarisationsrichtung erfolgt, und daS aus beiden Messungen die Abweichungen sowohl der Oberseite als auch der Unterseit von der Ebenheit ermittelt werden, und zwar summiert oder einzeln.

## Claims

1.  Optical scanning apparatus for transparent, substantially flat plate-like or sheet-like material, the apparatus comprising an optical transmitter device (21, 22, 29, 30, 31) having a light source (21) and a light deflecting device, such as a mirror wheel (22), illuminated by the light beam generated by the light source, with the light deflecting device generating a scanning beam (14) which executes a periodic scanning movement in a scanning plane (11) extending obliquely to the surface of the material (13) and with the scanning beam generating a scanning light bead (16) on the surface of the material (13), the scanning light bead moving along a scanning line (15) and the apparatus further comprising a photoelectric optical light receiving arrangement (17) arranged relative to the transmitter device (21, 22, 29, 30, 31) at an angle equal to the angle of reflection (2$\alpha$), characterised in that the angle (2$\alpha$) between the transmitter device (21, 22, 29, 30, 31) and the light receiving arrangement (17) is equal to twice the Brewster angle ($\alpha$); in that the transmitter device (21, 22, 29, 30, 31) contains a linear polariser (31) which polarises the light of the scanning beam which executes the periodic scanning movement in the scanning plane (11) linearly parallel to the surface of the material (13); and in that the light receiving arrangement (17) which detects the light reflected from the upper side and from the lower side of the web material (13) contains a differentiating array (23, 24, 25, 26, 27) which determines angular deviations between the beams reflected from the upper side and from the lower side.

2.  Optical scanning apparatus in accordance with claim 1, characterised in that a second scanning beam which executes a scanning movement in a steeper scanning plane (11') impinges on the scanning line (15) and in that a further photoelectric light receiving arrangement (18, 19) is respectively arranged at the angle of reflection ($\beta$) of the second scanning beam and/or in its extension.

3.  Optical scanning apparatus in accordance with claim 1 and claim 2, characterised in that both the scanning beams present in the two scanning planes (11, 11') are generated using a partially transmitting mirror (20) from the same light source (21) and the same light deflecting device (22).

4.  Optical scanning apparatus in accordance with one of the preceding claims, characterised in that the light receiving arrangements (17; 17, 38; 17, 18, 19, 45) have at least two and preferably however several individual photoreceivers (23, 24, 25, 26, 27) arranged in a specific direction alongside one another.

5.  Optical scanning apparatus in accordance with one of the claims 1 to 3, characterised in that the light receiving arrangements (17; 17, 38; 17, 18, 19, 45) each have a position sensitive photoreceiver.

6.  Optical scanning apparatus in accordance with claim 4, characterised in that the individual photoreceivers (23, 24, 25, 26, 27) are arranged as a linear array extending in a direction of the reflection displacement, or as an areal array extending perpendicular to the above named direction.

7.  A method of measuring deviations of the surfaces of a transparent material from flatness using an optical scanning apparatus, wherein a light beam generated by a light source illuminates a light deflecting device, such as a mirror wheel, which generates a scanning beam which executes a periodic scanning movement in a scanning plane, the scanning beam generating on the surface of the material a scanning light bead which moves along a scanning line, with the scanning light bead being detected by a photoelectric light receiving arrangement arranged at the reflection angle, characterised in that the light receiving arrangement is arranged and designed in such a manner that the light reflected from the upper side and from the lower side of the web material is differentially detected by the light receiving arrangement, such that angular deviations between the beams reflected from the upper side and from the lower side can be determined; in that the plane of the scanning beam forms the Brewster angle relative to the normal to the surface of the material; and in that light is used which is periodically polarized alternately parallel and perpendicular to the scanning plane (11) and the output signals of the light receiving arrangement (17) are separately evaluated within each period in which a predetermined state of polarization occurs.

8. Method in accordance with claim 7, wherein the material is continuously advanced perpendicular to the scanning line and parallel to its plane, characterised in that the direction of polarisation is periodically changed with a frequency which is so high that in practice at each point of the material one measurement takes place with the one direction of polarisation and one measurement takes place with the other direction of polarisation; and in that the deviations of both the lower side and also of the upper side from flatness are derived from the two measurements, and indeed either as a summed value or individually.

**Revendications**

1. Dispositif de balayage optique pour matériau transparent sensiblement plan en forme de plaque ou de feuille, comprenant un dispositif émetteur (21, 22, 29, 30, 31) qui comporte une source lumineuse (21) et un agencement déflecteur de lumière, tel qu'une roue à miroirs (22), qui est illuminé par le rayon lumineux produit par ladite source, et qui produit un rayon de balayage (14) qui décrit un mouvement périodique de balayage dans un plan de balayage (11) s'étendant obliquement par rapport à la surface du matériau (13), ledit rayon de balayage produisant à la surface du matériau (13) une tache lumineuse de balayage (16) qui se déplace le long d'une ligne de balayage (15), et le dispositif comprenant un agencement optique photo-électrique de réception de lumière (17) qui est agencé par rapport au dispositif émetteur (21, 22, 29, 30, 31) suivant un angle égal à l'angle de réflection (2α), caractérisé en ce que l'angle (2α) entre le dispositif émetteur (21, 22, 29, 30, 31) et l'agencement de réception de lumière (17) est égal au double de l'angle de Brewster (α), en ce que le dispositif émetteur (21, 22, 29, 30, 31) comprend un polariseur (31) linéaire qui polarise linéairement parallèlement à la surface du matériau (13) la lumière du rayon de balayage (14) qui décrit des déplacements périodiques de balayage dans le plan de balayage (11), et en ce que l'agencement de réception de lumière qui détecte la lumière réfléchie depuis la surface supérieure et depuis la surface inférieure du matériau en bande (13) comprend un réseau de différentiation (23, 24, 25, 26, 27) qui détermine des déviations angulaires entre les rayons lumineux réfléchis depuis la surface supérieure et depuis la surface inférieure.

2. Dispositif de balayage optique selon la revendication 1, caractérisé en ce qu'un second rayon de balayage qui décrit un mouvement de balayage dans un plan de balayage plus incliné (11') atteint la ligne de balayage (15), et en ce qu'un autre agencement photo-électrique de réception de lumière (18, 19) respectif est agencé suivant l'angle de réflection (β) de ce second rayon de balayage et/ou dans son prolongement.

3. Dispositif de balayage optique selon les revendication 1 et 2, caractérisé en ce que les deux rayons de balayage prévus dans les deux plans de balayage (11, 11') sont produits à partir de la même source lumineuse (21) et le même dispositif déflecteur de lumière (22) en utilisant un miroir semi-transparent (20).

4. Dispositif de balayage optique selon l'une quelconque des revendications précédentes, caractérisé en ce que les agencements récepteurs de lumière (17; 17, 38; 17, 18, 19, 45) comportent au moins deux photorécepteurs élémentaires, toutefois de préférence plusieurs photorécepteurs (23, 24, 25, 26, 27) élémentaires arrangés les uns contre les autres dans une direction déterminée.

5. Dispositif de balayage optique selon l'une quelconque des revendications 1 à 3, caractérisé en ce que les agencements récepteurs de lumière (17; 17, 38; 17, 18, 19, 45) comprennent respectivement un photorécepteur sensible à la position.

6. Dispositif de balayage optique selon la revendication 4, caractérisé en ce que les photorécepteurs élémentaires (23, 24, 25, 26, 27) sont arrangés suivant un réseau linéaire qui s'étend dans la direction de la déviation de réflection, ou suivant un réseau de surface qui s'étend également perpendiculairement à cette dernière direction.

7. Procédé de mesure des déviations de la surface d'un matériau transparent par rapport à la planéité, avec un dispositif optique de balayage, dans lequel un rayon lumineux produit par une source lumineuse illumine un dispositif déflecteur de lumière, tel qu'une roue à miroirs, ce dispositif déflecteur produisant un rayon de balayage qui décrit des mouvements périodiques de balayage dans un plan de balayage et qui produit à la surface du matériau une tache lumineuse de balayage en déplacement le long d'une ligne de balayage, ladite tache lumineuse étant détectée par un agencement photo-électrique récepteur de lumière agencé suivant l'angle de réflexion, caractérisé en ce que l'agencement récepteur de lumière est agencé et conçu de telle manière que les lumières réfléchies par la surface supérieure et par la surface inférieure du matériau en bande sont détectées de façon différenciée par l'agencement récepteur de lumière, de sorte que des déviations angulaires entre les rayons réfléchis depuis la surface supérieure et depuis la surface inférieure peuvent être constatées, en ce que le plan de balayage forme avec la perpendiculaire à la surface du matériau l'angle de Brewster, et en ce que l'on utilise de la lumière polarisée de manière périodique en alternance parallèlement et perpendiculairement au plan de balayage (11), et que l'on évalue séparément les signaux de sortie de l'agencement récepteur de lumière au cours de chaque période pendant laquelle apparait un état donné de polarisation.

8. Procédé selon la revendication 7, dans lequel le matériau est déplacé en continu perpendiculairement à la ligne de balayage et parallèlement à son plan caractérisé en ce que la direction de polarisation est modifiée périodiquement à une fréquence si élevée que l'on effectue pratiquement en chaque point du matériau une mesure pour l'une des directions de polarisation et une mesure pour l'autre direction, et en ce que l'on détermine à partir des deux mesures les déviations à la fois de la surface supérieure et de la surface inférieure par rapport à la planéité, et en fait additionnées ou séparées.

# FIG. 1

EP 0 304 805 B1

# FIG. 1a

FIG. 2

# FIG. 3

# FIG. 4

FIG. 5

FIG. 6